# EUROPÄISCHE PATENTANMELDUNG

(11) **EP 2 017 746 A1**
(43) Veröffentlichungstag der Anmeldung: **21.01.2009**
(21) Anmeldenummer: 07008340.7
(22) Anmeldetag: 24.04.2007
(51) Int. Cl.: G06F 17/28, G06F 17/30

(54) **Verfahren und Vorrichtung zur Planung und Auswertung industrieller Prozesse**

(71) Anmelder: SIEMENS AKTIENGESELLSCHAFT, 80333 München (DE)
(72) Erfinder: Grüber, Friedrich-Claus, 91583 Schillingsfürst (DE)

(57) **Zusammenfassung**

Im Rahmen der Planung und Auswertung eines in einen Haupt-Prozess (HP) und eine Anzahl von Neben-Prozessen (NP) gegliederten industriellen Prozesses werden den Prozess betreffende Eingabedaten in einer vom Benutzer wählbaren Hauptsprache erfasst. Die Eingabedaten werden eindeutig dem Haupt-Prozess (HP) oder einem der Neben-Prozesse (NP) zugeordnet, wobei eine automatische Indizierung erfolgt. Weiter erfolgt unter Verwendung einer Sprachtabelle (Tₛ) bei Beibehaltung der Indizierungen eine automatische Übersetzung der erfassten Eingabedaten. Schließlich werden auswertbare, multi-thematisch dem Haupt-Prozess (HP) und/oder mindestens einem Neben-Prozess (NP) zugeordnete Prozessdaten (PD) bereitgestellt, welche sprachunabhängig ermittelt wurden, wobei eine graphische Darstellung unter Verwendung einer von mehreren, einstellbaren Sprachen vorgesehen ist.

## Beschreibung

Die Erfindung betrifft Verfahren zur Erfassung, Planung, Auswertung und Optimierung von industriellen Prozessen in Fabriken und Anlagen sowie eine zur Durchführung der Verfahren geeignete Vorrichtung.

Aus der EP 1 069 486 B1 ist ein Verfahren zur Steuerung eines komplexen dynamischen Prozesses bekannt. Ein Prozess ist dabei als System zur Transformation eines eingehenden in einen ausgehenden Material-, Energie- oder Informationsfluss definiert. Um den Prozess zu steuern, werden an das Steuerpersonal periodisch erfasste Informationen übermittelt, wobei eine Übermittlung nur dann vorgesehen ist, wenn bei einer Beurteilung festgestellt wurde, dass die Informationen im gegebenen Kontext notwendig und geeignet sind, dazu beizutragen, den Prozess mit seinen Produktionszielen in Übereinstimmung zu halten oder zu bringen.

Die DE 199 62 230 A1 offenbart ein Verfahren zur industriellen Steuerung für Werkzeugmaschinen, Roboter und/oder Fertigungsmaschinen. Hierbei werden beim Vorliegen von Alarmen und/oder Meldungen im Umfeld einer industriellen Steuerung über SMS-Meldungen und/oder e-mails relevante Informationen an einen vordefinierbaren Empfängerkreis gesendet, wobei die Sprache, in welcher die Meldungen abgefasst sind, einstellbar ist. Zusätzlich zur Anzeige von Text kann auch die Anzeige einer Alarmnummer vorgesehen sein.

Im Rahmen der Planung industrieller Prozesse werden nach dem Stand der Technik typischerweise Lasten- und Pflichtenhefte erstellt. Die Bearbeitung der verschiedenen Themen, welche hierbei zu berücksichtigen sind, gestaltet sich in der Praxis häufig sehr aufwändig. Ebenso ist die Auswertung industrieller Prozesse in der Regel sehr aufwändig.

Der Erfindung liegt die Aufgabe zugrunde, die Planbarkeit und Auswertbarkeit industrieller Prozesse zu verbessern.

Diese Aufgabe wird erfindungsgemäß gelöst durch ein Verfahren zur Planung eines industriellen Prozesses mit den Merkmalen des Anspruchs 1, durch ein Verfahren zur Auswertung eines industriellen Prozesses mit den Merkmalen des Anspruchs 10, sowie durch eine Vorrichtung zur Planung und Auswertung industrieller Prozesse mit den Merkmalen des Anspruchs 12. Im Folgenden im Zusammenhang mit den Verfahren erläuterte Ausgestaltungen und Vorteile der Erfindung gelten sinngemäß auch für die Vorrichtung und umgekehrt.

Im Rahmen der Planung und Auswertung eines in einen Haupt-Prozess und eine Anzahl von Neben-Prozessen gegliederten industriellen Prozesses werden den Prozess betreffende Eingabedaten in einer vom Benutzer wählbaren Hauptsprache erfasst. Die Eingabedaten werden eindeutig dem Haupt-Prozess oder einem der Neben-Prozesse zugeordnet, wobei eine automatische Indizierung erfolgt. Weiter erfolgt unter Verwendung einer Sprachtabelle bei Beibehaltung der Indizierungen eine automatische Übersetzung der erfassten Eingabedaten. Schließlich werden auswertbare, multi-thematisch dem Haupt-Prozess und/oder mindestens einem Neben-Prozess zugeordnete Prozessdaten bereitgestellt, welche sprachunabhängig ermittelt wurden, wobei eine graphische Darstellung unter Verwendung einer von mehreren, einstellbaren Sprachen vorgesehen ist.

Mit der Erfindung wird vorzugsweise ein Werkzeug bereitgestellt, welches sowohl zur Planung als auch zur Auswertung und Optimierung von Prozessen nutzbar ist. Das Werkzeug kann softwaretechnisch realisiert sein und ist auf jegliche industrielle Prozesse anwendbar, beispielsweise eine Abfüllanlage in einer Brauerei, eine Gepäcksortieranlage in einem Flughafen, eine Postverteilanlage oder ein Automobilwerk.

Im Rahmen der Auswertung eines Prozesses werden zunächst Ist-Daten des Prozesses bereitgestellt. Bei den Ist-Daten kann es sich entweder um Messdaten eines tatsächlich in einer industriellen Anlage ablaufenden Prozesses oder um Daten eines in einer Simulation ablaufenden Prozesses handeln. Ebenso sind Daten, die aus realen, Energie- und/oder Material verarbeitenden Abläufen gewonnen wurde, mit Prognose- oder Simulationsdaten verknüpfbar. In jedem Fall ist eine eindeutige Zuordnung der auf irgendeine Weise erfassten Ist-Daten zum Haupt-Prozess oder zu einem Neben-Prozess des industriellen Prozesses gegeben. Die Ist-Daten werden mittels einer Prozessdatenauswerteeinheit automatisch mit in einer multilingualen Sprachtabelle enthaltenen Einträgen verknüpft. In Abhängigkeit von einer gewählten Spracheinstellung werden im weiteren Verlauf des Verfahrens aus den Ist-Daten sowie aus Einträgen der Sprachtabelle automatisch graphisch darstellbare Ausgabedaten generiert, wobei nach Vorgaben des Benutzers thematische Zusammenhänge zwischen einzelnen Daten kenntlich gemacht werden können. Insgesamt wird dem Benutzer die Möglichkeit zur multi-thematischen Auswertung von Daten bei freier Sprachwahl angeboten.

Von besonderem Vorteil ist die Möglichkeit, bei der Erfassung oder bei der Auswertung eines industriellen Prozesses bei jedem Schritt eine Benutzersprache gesondert zu wählen. Hierdurch sind Eingaben durch verschiedene Bedienpersonen möglich, welche die Eingabesprache individuell wählen können. Der den industriellen Prozess betreffende Datenverarbeitungsprozess ist dank der mit einer multilingualen Sprachtabelle hinterlegten integrierten systematischen Erfassungsmethodik von der vom Benutzer oder von den Benutzern gewählten, nicht notwendigerweise einheitlichen Spracheinstellung unabhängig. Im Regelfall wird bei der Erfassung eines Prozesses zunächst eine Hauptsprache festgelegt, in welcher in Textform eingegebene Daten erfasst sowie, solange keine andere Einstellung erfolgt, als Texte abgefasste Meldungen ausgegeben werden.

Allgemein ist ein industrieller Prozess, auch als Gesamtprozess bezeichnet, in mindestens einen Haupt-Prozess und eine Anzahl Neben-Prozesse gegliedert. Die Gliederung kann vor der Erfassung prozessrelevanter Daten vorgegeben oder erst mit der Erfassung von Daten festgelegt werden, wobei unter erfassten Daten sowohl vom Benutzer eingegebene Daten als auch automatisch erfasste Daten verstanden werden. Die diversen, typischerweise aus verschiedenen Quellen stammenden, dem Haupt-Prozess oder einem Neben-Prozess zugeordneten Daten werden vorzugsweise in einem zumindest teilweise automatisierten Datenverarbeitungsprozess systematisch zu Themen zusammengefasst. Als Beispiel eines solchen Themas, welches Haupt- und Nebenprozesse, gegebenenfalls auch Unterprozesse durchdringt, sind Verbräuche von Resourcen zu nennen. Die Resourcenaufwände können sich etwa auf den Verbrauch von für den industriellen Prozess benötigten Materialien, Energie oder Medien, beispielsweise Wasser, Chemikalien, Strom, Druckluft oder Kohlendioxid, beziehen. Ebenso sind unter dem Thema Resourcenaufwände auch personelle Aufwendungen, insbesondere Arbeitszeiten, erfassbar.

Ist die Struktur eines industriellen Prozesses erfasst, wobei Benutzereingaben, die prozessrelevante Daten festlegen, in verschiedenen natürlichen Sprachen, beispielsweise in Deutsch, in Englisch und in weiteren Sprachen, verarbeitbar sind, so erfolgt in vorteilhafter Weise eine automatische Analyse der Prozessstruktur. Als Ergebnis dieser Analyse wird dem Benutzer beispielsweise automatisch eine Schnittstelle angeboten, an welche ein zusätzlicher Prozess ankoppelbar ist. Dieser Prozess wiederum ist, wie sämtliche anderen Prozesse auch, in Haupt-, Neben- und Unterprozesse, bei Bedarf in einzelne Prozessschritte aufgeteilt, strukturierbar. Über das Bereitstellen von Schnittstellen hinaus ermittelt ein nach der Erfindung gestaltetes Planungswerkzeug automatisch technische Komponenten, deren Verwendung zur Optimierung des industriellen Prozesses geeignet ist.

Durch die simultane Analyse des industriellen Prozesses bereits bei dessen Planung, das heißt bei der Definition der miteinander verknüpften Einzel- oder Teilprozesse, entfällt die Notwendigkeit, herkömmliche Lasten- und Pflichtenhefte zu erstellen. Vorzugsweise erfolgt die Erfassung der den Gesamtprozess beschreibenden Eingabedaten in systematischer Weise nach Haupt-Prozess, Neben-Prozessen und Unter-Prozessen geordnet, wobei bei jedem Erfassungsschritt die Eingabesprache gesondert wählbar ist.

Werden vom Benutzer Änderungen am Gesamtprozess vorgenommen, so können die neuen Prozessstrukturen sofort graphisch dargestellt werden. Die Prozessänderungen selbst können auf benutzerfreundliche Weise mittels einer graphischen Benutzeroberfläche durchgeführt werden. Beispielsweise ist es möglich, einen Funktionsbaustein innerhalb eines Prozesses von einem Neben- oder Teilprozess zu einem anderen neben- oder untergeordneten Prozess zu verschieben. Nach einem solchen Verschiebevorgang können, wie zu jedem anderen Zeitpunkt der Prozessplanung auch, Auswirkungen der vorgenommenen Änderung auf den Gesamtprozess automatisch ausgewertet werden.

In die Auswertung des Gesamtprozesses sowie einzelner Teile des Prozesses können nicht nur technische, sondern auch wirtschaftliche Aspekte einbezogen werden. Insbesondere können automatisch vorgeschlagene Änderungen an der den industriellen Prozess durchführenden Anlage, das heißt vorgeschlagene Hardware-Änderungen, unter Kostengesichtspunkten ausgewertet werden. Unter Hardware werden hierbei im weitesten Sinne jegliche an einem industriellen Prozess beteiligte materielle Komponenten, beispielsweise Komponenten zur Lieferung von Energie oder Betriebsstoffen sowie Komponenten zur Verarbeitung von Stoffen, verstanden. Eine betriebswirtschaftliche Auswertung ist ebenso mit Hilfe des Planungswerkzeugs möglich, wenn dieses Änderungen am Verfahrensablauf, insbesondere mittels zusätzlicher Softwarekomponenten realisierbare Änderungen an der Steuerung oder Regelung des industriellen Prozesses, vorschlägt. Auch derartige Software-Änderungen sind in vorteilhafter Weise graphisch darstellbar. Das Planungswerkzeug sieht zu diesem Zweck beispielsweise die Darstellung von Prozessen in Form von Flussdiagrammen vor. Ebenso können automatisch generierte Tabellen, bedarfsweise in Kombination mit einem Flussdiagramm, geeignet sein, den in der Planung befindlichen oder auszuwertenden industriellen Prozess übersichtlich darzustellen.

Die Auswertung des industriellen Prozesses kann sich, wie erläutert, mit der Planungsphase überschneiden, wobei in diesem Fall nicht der real in der industriellen Anlage ablaufende, sondern ein virtueller Prozess ausgewertet und bedarfsweise optimiert wird. Unabhängig davon, ob die Auswertung einen tatsächlich ablaufenden oder einen simulierten Prozess betrifft, werden die als Ausgangspunkt der Auswertung verwendeten Daten als Ist-Daten des Prozesses bezeichnet. Diese Ist-Daten sind, ebenso wie die als Ergebnis der Auswertung erhaltenen Daten, thematisch geordnet. Eine besonders ausgeprägte Benutzerfreundlichkeit ist dadurch gegeben, dass das Planungswerkzeug die Themen, welchen die verschiedenen Daten zuzuordnen sind, automatisch identifiziert. Entsprechend der automatisch vorgenommenen Themenzuordnung erfolgt in gleichfalls automatisierter Weise eine automatische Indizierung der verschiedenen Daten. Diese Indizierung der thematisch strukturierten Daten zieht sich durch den gesamten Prozess, so dass insgesamt von einer Spiegelung der Themen am zu planenden und/oder auszuwertenden Prozess gesprochen werden kann.

Der Benutzer hat die Möglichkeit, bei der Auswertung des Prozesses ein einzelnes Thema oder mehrere Themen auszuwählen und damit den Betrachtungsfokus der Auswertung vorzugeben. Sowohl beim realen Betrieb einer industriellen Anlage als auch bei der Auswertung von Simulationsdaten können hierbei nicht nur Zustände des bestimmungsgemäßen Anlagenbetriebs, sondern auch Störungen des Betriebs betrachtet werden. Damit umfassen unter verschiedenen Aspekten oder Randbedingungen durchführbare Auswertungen beispielsweise Rohmaterialverbräuche, Produktionsvolumina, Benutzungszeiten und -grade von Anlagenkomponenten ebenso wie Störschemata, Stillstandsgründe und Stillstandszeiten.

Sind Fehlerursachen, basierend auf Messdaten uns/oder Prognosedaten, identifiziert, so können automatisch Vorschläge zur Behebung der Mängel oder zur Reduzierung der Wahrscheinlichkeit künftiger Störungen des bestimmungsgemäßen Betriebs generiert werden. Solche Maßnahmen sind beispielsweise die Installation zusätzlicher Hardwarekomponenten, die Erfassung zusätzlicher Messdaten oder die Verkürzung von Wartungsintervallen. In Einzelfällen kann es bereits ausreichend sein, zusätzliche Alarmschwellen festzusetzen oder existierende Alarmschwellen herabzusetzen, um Abweichungen vom Normalbetrieb der industriellen Anlage früher zu detektieren und Gegenmaßnahmen einleiten zu können. Geeignete Maßnahmen, den Betrieb der industriellen Anlage zuverlässiger zu gestalten, können auch zusätzliche Softwarefunktionen zur erweiterten Unterstützung des Ablaufcontrollings darstellen.

Ein Ziel bei der durch das Planungswerkzeug unterstützten Optimierung des Betriebs der industriellen Anlage kann nicht nur die Erhöhung der Zuverlässigkeit, sondern beispielsweise auch der möglichst effektive Einsatz von Resourcen sein. Allgemein ist die Möglichkeit gegeben, beliebige die industrielle Anlage betreffende, prozess-relevante Themen multi-thematisch zu verknüpfen. Dem Benutzer steht hierfür ein Multi-Index-Suchalgorithmus zur Verfügung, der die automatisch indizierten Daten unabhängig von der gewählten Spracheinstellung verarbeitet. Durch die sprachunabhängige Verarbeitung der Prozessdaten ist eine besonders schnelle Datenverarbeitung sichergestellt.

Der Vorteil der Erfindung liegt insbesondere darin, dass durch eine sowohl multi-thematische als auch multilinguale, eine Sprachtabelle nutzende, computergestützte Datenverarbeitung die Planung, die Auswertung und die Optimierung eines industriellen Prozesses besonders rationell durchführbar ist, wobei in jedem Stadium Prozessänderungen mit geringem Aufwand implementierbar sind.

Nachfolgend werden Ausführungsbeispiele der Erfindung anhand einer Zeichnung näher erläutert. Hierin zeigen:
- FIG 1: in einem Flussdiagramm ein Verfahren zur Planung eines industriellen Prozesses,
- FIG 2: ein Detail einer im Prozess nach FIG 1 verwendeten Datenstruktur,
- FIG 3: eine im Prozess nach FIG 1 verwendete Sprachtabelle,
- FIG 4: in einem Flussdiagramm ein Verfahren zur Auswertung eines industriellen Prozesses,
- FIG 5: in einer symbolisierten Darstellung eine zur Durchführung des Verfahrens nach FIG 1 sowie des Verfahrens nach FIG 4 geeignete Vorrichtung, und
- FIG 6: vereinfacht eine graphische Darstellung eines mittels der Vorrichtung nach FIG 5 abgebildeten industriellen Prozesses.

Einander entsprechende Teile, Prozessschritte, Datenstrukturen oder Parameter sind in allen Figuren mit den gleichen Bezugszeichen gekennzeichnet.

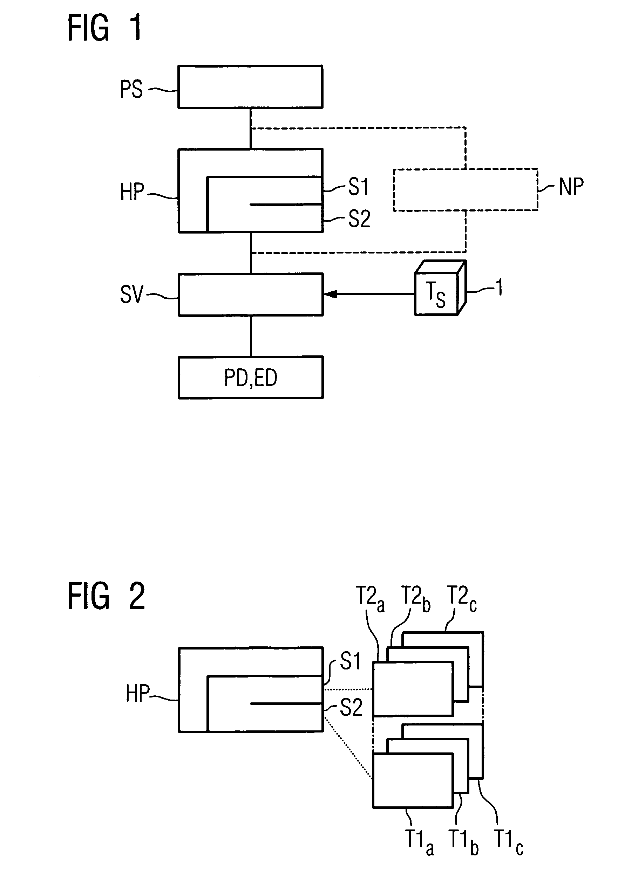

In FIG 1 ist in einem vereinfachten Flussdiagramm die Planung eines industriellen Prozesses, beispielsweise in einem Lebensmittel verarbeitenden Betrieb, veranschaulicht. Die Prozessplanung ist grundsätzlich unabhängig von der Art des Prozesses. Beispielsweise kann es sich bei dem Prozess auch um die Herstellung von Metallprodukten oder chemischen Erzeugnissen handeln. Ebenso kann der Prozess auch Logistikfunktionen betreffen, die keine Veränderung materieller Produkte beinhalten.

Zu Beginn des Planungsprozesses, als Prozessstart PS bezeichnet, liegen bereits grobe Informationen über die Art und/oder Struktur des zu planenden Prozesses vor. Beispielsweise handelt es sich um den Betrieb eines Gärkellers einer Brauerei, um die Abfüllung von Bier, um die Reinigung von Fässern oder, über die genannten Vorgänge hinausgehend, um den gesamten Betrieb einer Brauerei vom Bezug der Roh-, Hilfs- und Betriebsstoffe über den eigentlichen Brauprozess bis zum Vertrieb der Produkte und zur Entsorgung beziehungsweise Verwertung von Abfällen. Vereinfachend wird im Folgenden davon ausgegangen, dass es sich um einen technisch klar abgrenzbaren Prozess wie etwa die Handhabung und Behandlung von Fässern, ausgehend von der Leergutannahme über die Reinigung und Befüllung bis zur Kommissionierung der versandfertigen Ware, handelt.

Ein Haupt-Prozess HP ist in mehrere Prozessschritte gegliedert, von welchen lediglich zwei Prozessschritte S1, S2 angedeutet sind. Die Gliederung des Gesamtprozesses ist nicht fest vorgegeben, sondern durch den Benutzer beeinflussbar. Insbesondere ist die Möglichkeit gegeben, Prozessparameter einzugeben oder vorgegebene Standardwerte des Prozesses zu ändern. Dies betrifft sowohl den Haupt-Prozess HP als auch nicht im vereinfachten Flussdiagramm dargestellte Nebenprozesse. In Abhängigkeit von den Benutzereingaben werden durch das softwaretechnisch realisierte Planungswerkzeug, mit welchem das Verfahren nach FIG 1 durchgeführt wird, Änderungen in der Struktur des Prozesses vorgeschlagen. Die Änderungen können alternativ auch manuell vom Benutzer eingegeben werden. Eine solche Änderung beinhaltet beispielsweise die Hinzufügung eines neuen Nebenprozesses NP, wie in Form gestrichelter Linien skizziert. In ähnlicher Weise kann der Benutzer selbst vorschlagen oder dem Benutzer wird vom Planungsvertrag vorgeschlagen, einen bestimmten Prozessschritt zu eliminieren oder gegen einen anderen Prozessschritt auszutauschen. In all diesen Fällen wird die Prozessstruktur simultan mit den Benutzereingaben computergestützt auf Plausibilität geprüft und nach Möglichkeit optimiert. Optimierungsvorschläge, etwa die Hinzufügung einer Schnittstelle, an welche ergänzende hard- oder softwaretechnische Funktionselemente ankoppelbar sind, können hierbei hinsichtlich jeglicher Auswirkungen auf den Gesamtprozess automatisch geprüft werden. Diese Prüfung umfasst je nach Benutzervorgaben auch eine Prognose der betriebswirtschaftlichen Auswirkungen der vorgeschlagenen Änderungen.

Bei der Planung des mindestens einen Hauptprozesses HP sowie der Nebenprozesse NP, welche ebenso wie der Hauptprozess HP jeweils in eine Anzahl Prozessschritte S1,S2 unterteilt sein können, gibt der Benutzer Eingabedaten im Textformat ein. Er bedient sich hierbei einer sogenannten Hauptsprache, die unter mehreren Sprachen wählbar ist. In der Regel werden in der Hauptsprache formulierte Eingabedaten, beispielsweise Anweisungen zur Durchführung eines Prozessschrittes oder einer im Prozess vorzunehmenden Messung, mit Hilfe einer Tastatur oder einer vergleichbaren Eingabevorrichtung, zum Beispiel eines berührungssensitiven Bildschirms, eingegeben. Prinzipiell sind auch die Eingabe gesprochener Anweisungen und die anschließende softwaretechnische Umsetzung in einen aus alphanumerischen Zeichen zusammengesetzten Text möglich.

In jedem dieser Fälle werden die den Prozess betreffenden Eingabedaten, welche in der vom Benutzer gewählten oder voreingestellten Hauptsprache formuliert sind, eindeutig dem Haupt-Prozess HP oder einem der Neben-Prozesse NP zugeordnet, wobei im Rahmen der Zuordnung, wie nachstehend noch näher erläutert eine automatische Indizierung erfolgt.

In einem als Sprachdatenverarbeitung SV bezeichneten Schritt des Verfahrens werden die erfassten Eingabedaten, welche außer vom Benutzer eingegebenen Daten auch messtechnisch gewonnene Daten umfassen können, automatisch mit einer in einem Datenspeicher 1 gespeicherten Sprachtabelle Tₛ korreliert. Die Sprachtabelle Tₛ ermöglicht eine automatische Übersetzung von in Textform vorliegenden Daten, beispielsweise Eingabedaten sowie Statusinformationen, wobei die den technischen Inhalt betreffenden Indizierungen von der Sprachwahl unabhängig sind.

Schließlich werden im in FIG 1 skizzierten Verfahren Prozessdaten PD bereitgestellt, welche, soweit keine weitere Verarbeitung dieser Daten vorgesehen ist, auch als Ergebnisdaten ED bezeichnet werden. Bei den Prozessdaten PD handelt es sich um auswertbare, multi-thematisch dem mindestens einen Haupt-Prozess HP und/oder einen Neben-Prozess NP zugeordnete, sprachunabhängige Daten. Die graphische Darstellung der Prozessdaten PD ist unter Verwendung einer von mehreren, einstellbaren Sprachen möglich. In ähnlicher Weise wie im Fall der Eingabedaten, welche unter Nutzung verschiedener Sprachen erfassbar sind, können auch bei der Anzeige der Prozessdaten PD oder Ergebnisdaten ED für verschiedene Daten, welche beispielsweise an unterschiedliche Nutzer des durch das Verfahren nach FIG 1 abgebildeten industriellen Prozesses zu leiten sind, unterschiedliche Spracheinstellungen getroffen werden.

In FIG 2 ist ein Ausschnitt des in FIG 1 veranschaulichten industriellen Prozesses genauer dargestellt. Jedem Prozessschritt S1,S2 sind demnach Themen T1ₐ ... T1_{c} beziehungsweise T2ₐ ... T2_{c} zugeordnet. Insgesamt ist eine mehrdimensionale, multi-thematische Datenstruktur gebildet, die eine Bearbeitung des zu planenden und zu optimierenden Prozesses unter unterschiedlichen Aspekten ermöglicht. Die verschiedenartige Verknüpfungen, wie durch gepunktete sowie strichpunktierte Linien angedeutet, aufweisende Datenstruktur ermöglicht zusammen mit leistungsfähigen Suchalgorithmen, den gesamten Prozess oder Teile des Prozesses nach beliebigen Aspekten, in FIG 2 durch die Indizes a ... c bezeichnet, zu durchsuchen, auszuwerten und darzustellen. Der eigentliche Such- und Auswertevorgang ist hierbei von getroffenen Spracheinstellungen unabhängig.

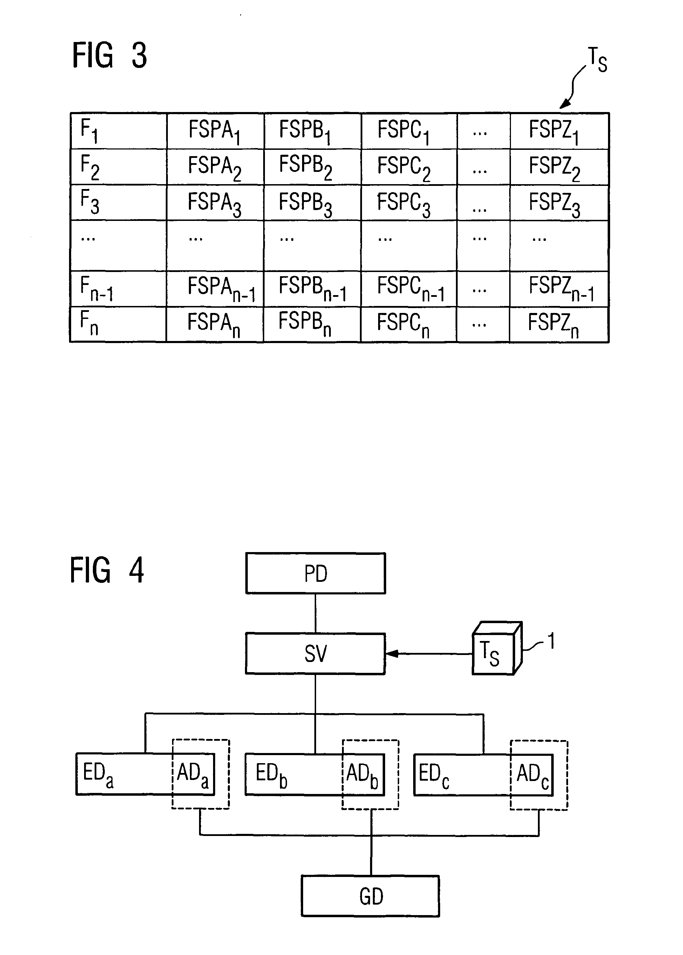

Die Sprachunabhängigkeit der Prozessdatenverarbeitung wird mit Hilfe der in FIG 3 näher dargestellten Sprachtabelle Tₛ sichergestellt. Technische, den industriellen Prozess betreffende Informationen sind ausschließlich in Feldern F₁ ... Fₙ der Sprachtabelle Tₛ enthalten. Um die technischen Vorgänge beim Ablauf des industriellen Prozesses auszuwerten, insbesondere Optimierungsmöglichkeiten zu ermitteln, muss daher - unabhängig von getroffenen Spracheinstellungen - nur auf die n Felder F₁ ... Fₙ zugegriffen werden. Jedem der Felder F₁ ... Fₙ ist eine Anzahl weiterer Felder zugeordnet, welche mit FSPA₁ ... FSPZ₁ (das Feld F₁ betreffend) bis FSPAₙ ... FSPZₙ (das Feld Fₙ betreffend) bezeichnet sind. In diesen Feldern sind den Feldern F₁ ... Fₙ entsprechende Sprachinformationen enthalten, wobei im schematisierten Beispiel nach FIG 3 die Buchstaben A ... Z für verschiedene Sprachen, beispielsweise Deutsch, Englisch, Französisch, Spanisch, Japanisch, etc. stehen. Durch die Verknüpfung der multilingualen Sprachtabelle Tₛ (FIG 3) mit der multidimensionalen Datenstruktur (FIG 2) ist in einzigartiger Weise eine hocheffiziente Prozessplanung und -auswertung bei jederzeit entsprechend den aktuellen Benutzeranforderungen änderbaren Spracheinstellungen möglich.

Ein in FIG 4 dargestellter Auswerteprozess geht von im Verfahren nach FIG 1 gewonnenen Prozessdaten PD aus und kann mit diesem Verfahren zu einem einzigen Verfahren verschmolzen werden. Die Prozessdaten PD können zwar, wie oben erläutert, in einer beliebigen Sprache visualisiert werden, weisen jedoch hinsichtlich ihrer Datenstruktur keine Abhängigkeit von einer Spracheinstellung auf. Soll diese Einstellung geändert oder - um Daten, welche in Klartextanzeige dargestellt werden, in zusätzlichen Sprachen anzuzeigen - erweitert werden, so wird im Verfahren nach FIG 4 eine Sprachdatenverarbeitung SV, ebenso wie im Verfahren nach FIG 4 unter Nutzung der Sprachtabelle Tₛ, durchgeführt. Hieran schließt sich der eigentliche Vorgang der Prozessdatenauswertung, welcher im Fall komplexerer Aufgabenstellungen einen mathematischen Multi-Index-Suchalgorithmus (vgl. FIG 2) nutzt, an. Als Ergebnis dieses Vorgangs werden zahlreiche, thematisch mittels der Multi-Indizierung (Indizes a ... c) geordnete Ergebnisdaten EDₐ ... ED_{c} bereitgestellt. Die Fülle dieser Daten ist in der Regel für eine übersichtliche graphische Darstellung nicht geeignet.

Aus diesem Grund werden aus den Ergebnisdaten EDₐ ... ED_{c} indizierte Ausgabedaten ADₐ ... AD_{c} extrahiert, welche zu graphisch darstellbaren Daten, sogenannten Graphikdaten GD, zusammengefasst werden.

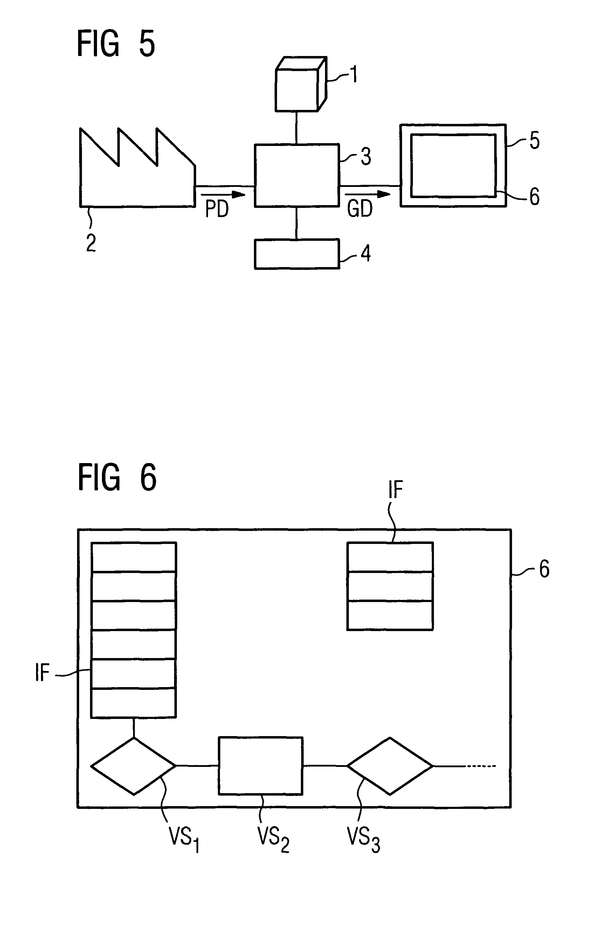

Die FIG 5 zeigt symbolisiert eine Vorrichtung, mit der das Verfahren nach FIG 1 und/oder FIG 4 durchführbar ist. In einer industriellen Anlage 2 gemessene beziehungsweise bei der Simulation des entsprechenden industriellen Prozesses gewonnene Prozessdaten PD werden an eine Prozessdatenauswerteeinheit 3 übermittelt, die mit dem Datenspeicher 1 datentechnisch verbunden ist. Benutzereingaben, beispielsweise Spracheinstellungen sowie Parameter der Prozesssteuerung und der Datenauswertung, sind mittels einer Eingabevorrichtung 4, insbesondere einer Tastatur, an die zur Durchführung der Verfahren nach den FIG 1 und 4 vorgesehene Prozessdatenauswerteeinheit 3 übertragbar. Die sowohl diese Benutzereingaben, welche im Fall von Texteingaben in einer von mehreren Sprachen (s. FIG 3, Spracheinstellungen A ... Z) verwertbar sind, als auch die Prozessdaten PD verarbeitende Prozessdatenauswerteeinheit 3 übermittelt die darstellbaren Graphikdaten GD an eine Ausgabevorrichtung 5, welche im vereinfachten Ausführungsbeispiel nach FIG 5 einen einzigen Bildschirm 6 aufweist.

Ein Beispiel einer möglichen Bildschirmdarstellung ist, ebenfalls in grob vereinfachter Weise, in FIG 6 wiedergegeben. Es handelt sich hierbei um eine Kombination aus einem den industriellen Prozess beschreibenden Flussdiagramm, umfassend eine Anzahl von Verfahrensschritten VS₁ ... VS₃, mit tabellarisch angeordneten Informationsfeldern IF, die einzelnen Verfahrensschritten VS₁, VS₃ zugeordnet sind. Die Informationsfelder IF zeigen beispielsweise einzelne Nebenprozesse NP betreffende Parametereinstellungen an und ergänzen damit den am Bildschirm 6 graphisch veranschaulichten Ablauf des industriellen Prozesses.

## Patentansprüche

1. Verfahren zur Planung eines industriellen Prozesses, mit folgenden Schritten:
- Gliederung des Prozesses in einen Haupt-Prozess (HP) und eine Anzahl von Neben-Prozessen (NP),
- Erfassung von den Prozess betreffenden Eingabedaten in einer vom Benutzer wählbaren Hauptsprache,
- eindeutige Zuordnung verschiedener erfasster Eingabedaten zum Haupt-Prozess (HP) oder zu einem der Neben-Prozesse (NP), wobei im Rahmen der Zuordnung eine automatische Indizierung erfolgt,
- automatische Übersetzung der erfassten Eingabedaten unter Verwendung einer Sprachtabelle (Tₛ), wobei die Indizierungen unverändert bleiben,
- Bereitstellung von auswertbaren, multi-thematisch dem Haupt-Prozess (HP) und/oder mindestens einem Neben-Prozess (NP) zugeordneten, sprachunabhängigen Prozessdaten (PD), wobei deren graphische Darstellung unter Verwendung einer von mehreren, einstellbaren Sprachen vorgesehen ist.

2. Verfahren nach Anspruch 1,
**dadurch gekennzeichnet, dass** dem Haupt-Prozess (HP) und einem Neben-Prozess (NP) zugeordnete Daten systematisch zu Themen zusammengefasst werden.

3. Verfahren nach Anspruch 1 oder 2,
**dadurch gekennzeichnet, dass** der Haupt-Prozess (HP) und/oder ein Neben-Prozess (NP) in mehrere Prozessschritte (S1,S2) gegliedert ist.

4. Verfahren nach einem der Ansprüche 1 bis 3,
**dadurch gekennzeichnet, dass** die Prozessdaten (PD) zur Durchführung des Prozesses benötigte Resourcenaufwände umfassen.

5. Verfahren nach einem der Ansprüche 1 bis 4,
**dadurch gekennzeichnet, dass** die Prozessdaten (PD) zur Durchführung des Prozesses benötigte Anlagenkomponenten umfassen.

6. Verfahren nach einem der Ansprüche 1 bis 5,
**dadurch gekennzeichnet, dass** die Erfassung der Eingabedaten schrittweise, nach Haupt-Prozess (HP) und Neben-Prozessen (NP) geordnet, erfolgt, wobei bei jedem Erfassungsschritt eine Eingabesprache gesondert wählbar ist.

7. Verfahren nach einem der Ansprüche 1 bis 6,
**dadurch gekennzeichnet, dass** die graphische Darstellung der auswertbaren Prozessdaten (PD) zumindest teilweise in tabellarischer Form erfolgt.

8. Verfahren nach einem der Ansprüche 1 bis 7,
**dadurch gekennzeichnet, dass** die graphische Darstellung der auswertbaren Prozessdaten (PD) zumindest teilweise in Form eines Flussdiagramms erfolgt.

9. Verfahren nach einem der Ansprüche 1 bis 8,
**dadurch gekennzeichnet, dass** automatisch eine Schnittstelle bereitgestellt wird, an welche ein zusätzlicher Prozess (NP) ankoppelbar ist.

10. Verfahren zur Auswertung eines industriellen Prozesses, welcher einen Haupt-Prozess (HP) und eine Anzahl von Neben-Prozessen (NP) umfasst, mit folgenden Schritten:
- erfasste Ist-Daten des Prozesses werden bereitgestellt, wobei eine eindeutige Zuordnung der Ist-Daten zum Haupt-Prozess (HP) oder einem Neben-Prozess (NP) gegeben ist,
- die Ist-Daten werden automatisch mit in einer multilingualen Sprachtabelle (Tₛ) enthaltenen Einträgen (F₁ ... Fₙ, FSPA₁ ... FSPAₙ, FSPZ₁ ... FSPZₙ) verknüpft,
- in Abhängigkeit von einer gewählten Spracheinstellung werden unter Nutzung der Ist-Daten sowie der Einträge (F₁ ... Fₙ, FSPA₁ ... FSPAₙ, FSPZ₁ ... FSPZₙ) der Sprachtabelle (Tₛ) automatisch Ausgabedaten (ADₐ ... AD_{c}) generiert,
- die Ausgabedaten (ADₐ ... AD_{c}) werden graphisch dargestellt, wobei thematische Zusammenhänge zwischen einzelnen Daten kenntlich gemacht sind,
- dem Benutzer wird automatisch die Möglichkeit zur multi-thematischen Auswertung von Daten (PD, EDₐ ... ED_{c}, ADₐ ... AD_{c}) angeboten.

11. Verfahren nach Anspruch 10,
**dadurch gekennzeichnet, dass** im Haupt-Prozess (HP) und/oder in einem Neben-Prozess (NP) bei einer Optimierung der Prozesse zu verwendende technische Komponenten automatisch ermittelt werden.

12. Vorrichtung zur Planung und Auswertung industrieller Prozesse, umfassend folgende Komponenten:
- eine Prozessdatenauswerteeinheit (3), welche Daten des Prozesses automatisch gemäß einem vorgebbaren Algorithmus verarbeitet und hierbei eindeutig mit in einer multilingualen Sprachtabelle (Tₛ) enthaltenen Einträgen (F₁ ... Fₙ, FSPA₁ ... FSPAₙ, FSPZ₁ ... FSPZₙ) verknüpft,
- eine Eingabevorrichtung (4), welche die Eingabe von den Algorithmus betreffenden Auswerteparametern sowie einer Spracheinstellung ermöglicht,
- eine Ausgabevorrichtung (5,6)), die zur Anzeige unter Berücksichtigung der Auswerteparameter und der Spracheinstellung gewonnener Ausgabedaten (ADₐ ... AD_{c},GD) vorgesehen ist.
